# EUROPEAN PATENT APPLICATION

(11) **EP 4 691 616 A1**
(43) Date of publication of application: **11.02.2026**
(21) Application number: 24778593.4
(22) Date of filing: 22.01.2024
(51) Int. Cl.: B01F 35/221, B01F 23/50, B01F 35/213, H01M 4/139

(54) **SLURRY MANUFACTURING APPARATUS AND SLURRY MANUFACTURING METHOD**

(30) Priority: 31.03.2023 JP 2023059490
(71) Applicant: Nihon Spindle Manufacturing Co., Ltd., Amagasaki-shi, Hyogo 661-8510 (JP)
(72) Inventor: ONISHI Keiichiro, Amagasaki-shi, Hyogo 661-8510 (JP)
(74) Representative: Louis Pöhlau Lohrentz
(86) International application number: PCT/JP2024/001725
(87) International publication number: WO 2024/202447

(57) **Abstract**

An object of the present invention is to provide a slurry manufacturing apparatus and a slurry manufacturing method that can optimize the amount of a carbon dioxide gas supplied as a neutralizing agent at all times in mixing powder and a liquid and can stably manufacture slurry. In order to solve the problem, there is provided a slurry manufacturing apparatus including a stirring and mixing unit that mixes powder and a liquid and produces slurry, a pH adjusting unit that supplies a carbon dioxide gas for adjusting a pH of the slurry, and a control unit that controls an amount of the carbon dioxide gas supplied from the pH adjusting unit based on a pH value of the slurry and a slurry manufacturing method using the slurry manufacturing apparatus. According to the invention, the supply of the carbon dioxide gas can be controlled according to the pH of the slurry. Therefore, a defect related to slurry manufacturing caused by excessive supply of the carbon dioxide gas can be prevented in advance, and the amount of the carbon dioxide gas supplied can be optimized at all times. Accordingly, the production of the slurry can be stably continued, and the quality of the slurry can be maintained and improved.

## Description

### Technical Field

The present invention relates to a slurry manufacturing apparatus and a slurry manufacturing method.

### Background Art

Slurry (a muddy suspension liquid or paste in which a solid is suspended in a liquid serving as a solvent or a dispersion medium) prepared by mixing powder and a liquid is known as one material form that is utilized in various fields.

As an example of a field that utilizes the slurry, a wide range of fields such as a lithium ion battery electrode material, a coating material, a nanofiber dispersion composite material, cosmetics such as an emulsion, a pharmaceutical product such as an ointment, and a food product can be given.

In mixing of powder and a liquid, in addition to various types of mixers such as a planetary mixer and a biaxial kneader, a slurry manufacturing apparatus that mixes while transferring the powder and the liquid is known. For example, PTL 1 discloses a powder mixing pump that efficiently and effectively performs suction of the powder and feed of the liquid and further mixing of the powder and the liquid in one pump.

### Citation List

### Patent Literature

[PTL 1] Japanese Unexamined Patent Publication No. 2006-281017

### Summary of Invention

### Technical Problem

As described in PTL 1, it is known to efficiently and effectively mix powder and a liquid by using a slurry manufacturing apparatus and a slurry manufacturing method accompanying suction of the powder and feed of the liquid.

In addition, in mixing of the powder and the liquid, it is known that the pH fluctuates in a slurry manufacturing process depending on properties and performance required for slurry which is a mixture of the powder and the liquid, and it is known that strong alkalization occurs by contact with water, particularly in a case where a composite oxide or a hydroxide is contained as the powder. For this reason, an acid is added during a slurry manufacturing time, and neutralization processing is performed. However, when an inorganic acid (hydrochloric acid, nitric acid, sulfuric acid, hydrofluoric acid, or the like) or an organic acid (formic acid, acetic acid, oxalic acid, lactic acid, or the like) is used, an effect (dissolution of the powder or the like) caused by a reaction with the powder itself or an effect (a decrease in slurry performance or the like) caused by the presence of a component remaining in the slurry occurs.

Therefore, in slurry manufacturing, a carbon dioxide gas is used as a neutralizing agent. Accordingly, there is an advantage in which powder and the neutralizing agent (carbon dioxide gas) do not directly react with each other and an acidic component of the neutralizing agent does not remain in slurry. On the other hand, in slurry manufacturing in which powder and a liquid are mixed, there is a problem in which when neutralization is performed using a carbon dioxide gas, a defect related to slurry manufacturing occurs, such as a decrease in mixing efficiency of the powder and the liquid and an increase in time required for mixing, caused by excessive supply of the carbon dioxide gas.

Therefore, an object of the present invention is to provide a slurry manufacturing apparatus and a slurry manufacturing method that can optimize the amount of the carbon dioxide gas supplied as a neutralizing agent at all times in mixing powder and a liquid and can stably manufacture slurry.

### Solution to Problem

The present inventor has conducted intensive studies on the above problems, and as a result, has found that by controlling supply of a carbon dioxide gas based on a pH value of slurry produced in mixing of powder and a liquid, it is possible to optimize the amount of the carbon dioxide gas supplied at all times and to stably manufacture slurry, thereby completing the present invention.

That is, the present invention is a slurry manufacturing apparatus and a slurry manufacturing method.

According to one aspect of the present invention, in order to solve the problem, there is provided a slurry manufacturing apparatus including a stirring and mixing unit that mixes powder and a liquid and produces slurry, a pH adjusting unit that supplies a carbon dioxide gas for adjusting a pH of the slurry, and a control unit that controls an amount of the carbon dioxide gas supplied from the pH adjusting unit based on a pH value of the slurry.

According to this feature, the supply of the carbon dioxide gas can be controlled according to the pH of the slurry. Therefore, a defect (poor dispersion, an increase in time required for slurry manufacturing, or the like) related to slurry manufacturing caused by excessive supply of the carbon dioxide gas can be prevented in advance, and the amount of the carbon dioxide gas supplied can be optimized at all times. Accordingly, the production of a mixture (slurry) of powder and a liquid can be stably continued, and the quality of the slurry can be maintained and improved.

In addition, in the slurry manufacturing apparatus according to one aspect of the present invention, the pH value of the slurry is measured by collecting a part of the slurry from a transfer path of the slurry.

In the pH measurement, depending on the properties and characteristics of the slurry, a load is large in a general pH measuring instrument, and damage to a pH meter (electrode damage) occurs in a short period of time, so that accurate measurement is difficult in some cases.

On the other hand, according to this feature, since it is not required to bring the pH measuring instrument into contact with the slurry at all times, stable pH measurement is possible, and the control of the amount of the carbon dioxide gas supplied associated therewith can also be stably continued.

In addition, in the slurry manufacturing apparatus according to one aspect of the present invention, the pH value of the slurry is measured by supplying the slurry to a path separate from the transfer path of the slurry.

According to this feature, the slurry can be collected and the pH can be measured by switching the path. Accordingly, in measuring the pH of the slurry, a load on the pH measuring instrument can be reduced, and the pH can be more easily and quickly measured.

In addition, in the slurry manufacturing apparatus according to one aspect of the present invention, the pH value of the slurry is directly measured on a transfer path of the slurry.

According to this feature, it is possible to simplify the structure related to the measurement of the pH of the slurry and to save space.

In addition, in the slurry manufacturing apparatus according to one aspect of the present invention, the pH value of the slurry is measured in a state where the stirring and mixing unit is stopped.

According to this feature, the slurry which is a target for pH measurement is slurry produced in a stage before (immediately before) the stop of the stirring and mixing unit. Accordingly, a degree of finish of the slurry in this stage can be confirmed through the pH measurement. In addition, after the pH measurement, when an operation of the stirring and mixing unit is restarted, it is possible to improve accuracy of control related to the amount of the carbon dioxide gas supplied by the control unit.

In addition, in the slurry manufacturing apparatus according to one aspect of the present invention, the control unit performs control related to setting and supplying of an additional amount of the carbon dioxide gas supplied according to a difference between a measured pH value and a set pH value of the slurry.

According to this feature, it is easy to program and automate a series of operations related to control of the amount of the carbon dioxide gas supplied (for example, to calculate an estimated pH value from an input amount and time of the carbon dioxide gas and to calculate the amount and time of the additional carbon dioxide gas from the actually measured pH value, or the like). Accordingly, without a special skill on a worker side, the amount of the carbon dioxide gas supplied can be optimized at all times, and it is possible to continue stable slurry manufacturing and to provide high-quality slurry.

In addition, according to another aspect of the present invention, in order to solve the problem, there is provided a slurry manufacturing method including a stirring and mixing process of mixing powder and liquid and producing slurry, a pH adjusting process of supplying a carbon dioxide gas for adjusting a pH of the slurry, and a control process of controlling an amount of the carbon dioxide gas supplied in the pH adjusting process based on a pH value of the slurry.

According to this feature, the supply of the carbon dioxide gas can be controlled according to the pH of the slurry. Therefore, a defect (poor dispersion, an increase in time required for slurry manufacturing, or the like) related to slurry manufacturing caused by excessive supply of the carbon dioxide gas can be prevented in advance, and the amount of the carbon dioxide gas supplied can be optimized at all times. Accordingly, the production of a mixture (slurry) of powder and a liquid can be stably continued, and the quality of the slurry can be maintained and improved.

### Advantageous Effects of Invention

According to the present invention, it is possible to provide the slurry manufacturing apparatus and the slurry manufacturing method that can optimize the amount of the carbon dioxide gas supplied as a neutralizing agent at all times in mixing the powder and the liquid and can stably manufacture slurry.

### Brief Description of Drawings

FIG. 1 is a schematic explanatory diagram of a slurry manufacturing apparatus according to a first embodiment of the present invention.
FIG. 2 is a schematic explanatory diagram of a slurry manufacturing apparatus according to a second embodiment of the present invention.

### Description of Embodiments

Hereinafter, a slurry manufacturing apparatus and a slurry manufacturing method according to embodiments of the present invention will be described in detail with reference to the drawings. The slurry manufacturing method according to the present invention is substituted for description of an operation of the slurry manufacturing apparatus in the present invention.

The slurry manufacturing apparatus and the slurry manufacturing method described in the embodiments are merely exemplified for describing the slurry manufacturing apparatus and the slurry manufacturing method according to the present invention, and the present invention is not limited thereto.

The slurry manufacturing apparatus in the present invention may be an apparatus that mixes powder and a liquid to manufacture slurry as a mixture, and processed content related to the mixing may be either dispersion of the powder in the liquid or suspension of the powder in the liquid.

In addition, the slurry manufacturing apparatus of the present invention can be widely applied in an industrial field that uses mixing of powder and a liquid or mixing of liquids. Examples of such a field include food product manufacturing, cosmetics manufacturing, and material preparation for industrial products. In particular, it is suitable that the slurry production apparatus can be applied in material preparation of industrial products in which pH fluctuations occur due to a chemical reaction or a reaction with moisture accompanying mixing of powder and a liquid or mixing of liquids and a pH likely to affect properties and performance of a mixture (slurry). More specifically, it is suitable that the slurry production apparatus can be applied in preparing an electrode material (electrode slurry) for a secondary battery.

As powder in the present invention, inorganic powder such as carbon black, carbon nanotube, graphene, mica, talc, alumina, silica, zeolite, and ceramic, powder or the like of metal or a metal oxide, cellulose nanofiber, powder of various organic compounds for use in such as pharmaceutical product, cosmetics, food product, or the like can be given. In addition, as powder in the present invention, active materials (positive electrode active materials and negative electrode active materials) or solid electrolytes known as electrode materials for a secondary battery, a binder, or the like can be given. More specifically, for example, as a positive electrode active material (positive electrode material), a lithium compound (lithium cobaltate, lithium nickelate, lithium manganate, lithium iron phosphate, and a complex and derivative thereof, or other lithium transition metal composite oxides, and the like) can be given, and as a negative electrode active material (negative electrode material), powder of silicon or a silicon-based oxide can be given. As powder, a single type of powder raw material may be used, or a plurality of types of powder raw materials may be used.

The liquid in the present invention is not particularly limited insofar as the liquid described above is mixed with powder to form a mixture (slurry). For example, as the liquid, in addition to water and aqueous solvents, non-aqueous solvents (inorganic solvents and organic solvents) or the like can be given. The type of liquid can be appropriately selected in consideration of the combination with the powder according to functions and properties required as a final mixture. As the organic solvent, organic solvents such as methanol, ethanol, hexane, toluene, benzene, DMSO, and DMF, oil components such as paraffin oil, or the like can be given, and as the inorganic solvent, silicone oil or the like can be given. In addition, as the liquid, a single type of liquid may be used, or a plurality of types of liquids may be mixed and used.

### [First Embodiment]

### [Slurry Manufacturing Apparatus]

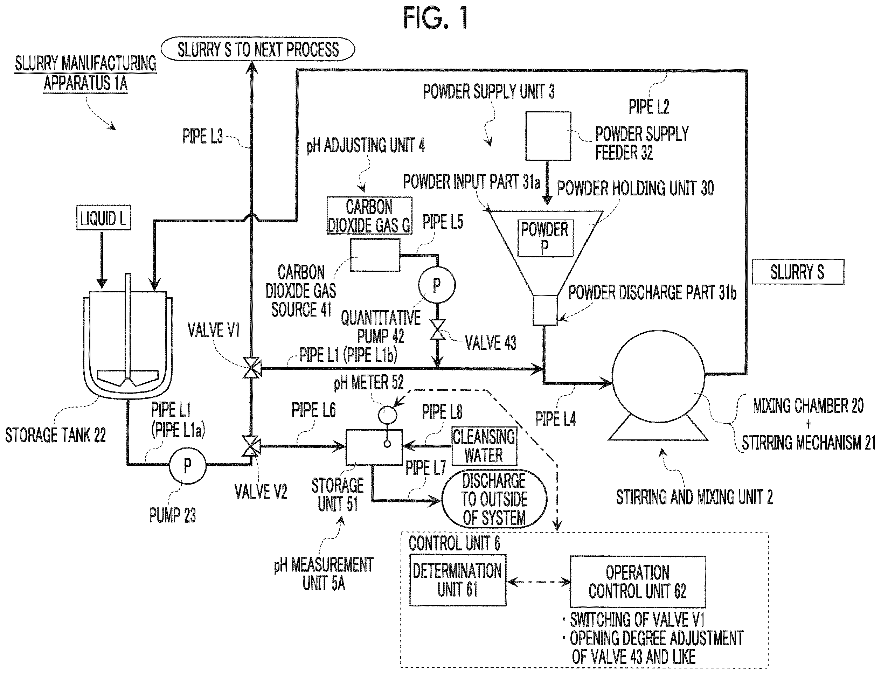

FIG. 1 is a schematic explanatory diagram showing a structure of a slurry manufacturing apparatus according to a first embodiment of the present invention.

As shown in FIG. 1, a slurry manufacturing apparatus 1A according to the present embodiment includes a stirring and mixing unit 2 and a powder supply unit 3. In addition, the slurry manufacturing apparatus 1A includes a pH adjusting unit 4 that supplies a carbon dioxide gas G for adjusting a pH of slurry S produced by the stirring and mixing unit 2, a pH measurement unit 5A that measures the pH of the slurry S, and a control unit 6 that controls the amount of the carbon dioxide gas supplied to the pH adjusting unit 4.

The slurry manufacturing apparatus 1A shown in FIG. 1 is an example of the slurry manufacturing apparatus 1A in the present embodiment and is not limited to the configuration shown in FIG. 1. In addition, in FIG. 1, an arrow indicated by a one-dot chain line indicates that components are connected in a controllable or inputtable manner. However, a part thereof is not shown.

As shown in FIG. 1, the slurry manufacturing apparatus 1A of the present embodiment supplies powder P from the powder supply unit 3, which stores the powder P, to the stirring and mixing unit 2, which mixes the powder P and a liquid L, to obtain a mixture (hereinafter, called the "slurry S"). In addition, the slurry manufacturing apparatus 1A achieves optimization of the amount of the carbon dioxide gas supplied from the pH adjusting unit 4 at all times such that excessive supply of the carbon dioxide gas used as a neutralizing agent does not occur in adjusting the pH of the produced slurry S.

Hereinafter, each configuration will be described.

### <Stirring And Mixing Unit>

The stirring and mixing unit 2 is for performing mixing processing for the powder P and the liquid L and producing (preparing) the slurry S. The stirring and mixing unit 2 in the present embodiment refers to a location where processing of mixing the powder P and the liquid L to obtain the slurry S is performed, and processed content includes dispersion or suspension of the powder P in the liquid L.

As the stirring and mixing unit 2, for example, any structure may be adopted insofar as the structure can perform stirring and mixing in a space including a stirring mechanism, and a specific structure thereof is not particularly limited. As an example of the structure of the stirring and mixing unit 2, for example, as shown in FIG. 1, the stirring and mixing unit 2 including a mixing chamber 20, a stirring mechanism 21, a storage tank 22 that stores the liquid L, a pipe L1 through which the liquid L in the storage tank 22 is supplied to a mixing chamber 20 side, and a pipe L2 through which the slurry S obtained through stirring and mixing in the mixing chamber 20 is discharged to the outside of the mixing chamber 20 can be given. As illustrated in FIG. 1, the stirring and mixing unit 2 in the present embodiment may form a circulation path for circulating the slurry S discharged from the mixing chamber 20 to the storage tank 22. The circulation path will be described later.

The mixing chamber 20 may be any chamber that forms a space for performing stirring and mixing of the powder P and the liquid L, and a specific structure thereof is not particularly limited. The mixing chamber 20 may be formed by a single space or may be partitioned to include a plurality of spaces.

The stirring mechanism 21 is for stirring and mixing the powder P and the liquid L supplied into the mixing chamber 20 and is included in the mixing chamber 20.

As an example of the stirring mechanism 21, a stirring mechanism having a configuration performing stirring and mixing by using a uniaxial stirring blade or a structure such as a blade, a stirring mechanism having a configuration performing dispersion by ultrasonic waves, a stirring mechanism having a configuration performing dispersion by a shearing force by using a planetary mixer, a biaxial kneader, or the like, a stirring mechanism having a configuration performing dispersion by cavitation and a shearing force, or the like can be given. In addition, from a viewpoint that due to the contraction/expansion of cavitation bubbles, agglomerated particles are efficiently dispersed and excessive pulverization of powder is unlikely to occur, it is more preferable to use a stirring mechanism having a configuration performing dispersion by cavitation and a shearing force. As the configuration performing dispersion by cavitation and a shearing force, for example, an already commercially available known configuration such as Jet Paceter (registered trademark) made by Nihon Spindle Manufacturing Co., Ltd., or the like can be given.

In addition, as the stirring and mixing unit 2, it is preferable to use a stirring and mixing unit in which the inside of the stirring and mixing unit 2 is under a negative pressure. Accordingly, since the powder P that is supplied from the powder supply unit 3 (to be described later) is quickly introduced into the stirring and mixing unit 2, it is possible to efficiently and effectively perform mixing of the powder P and the liquid L, and it is possible to obtain a good dispersion state.

As the configuration where the inside of the stirring and mixing unit 2 is under a negative pressure, for example, a stirring and mixing unit having a configuration capable of depressurizing the inside of the mixing chamber 20 can be given. As an example of such a configuration, a configuration where a depressurizing mechanism is directly provided in the mixing chamber 20, a configuration forming a negative pressure state in the mixing chamber 20 by circulating and supplying the liquid L to the mixing chamber 20, or the like can be given. Since, among types of the stirring mechanism 21 described above, a stirring mechanism performing dispersion by cavitation and a shearing force includes a configuration making a pressure in the mixing chamber 20 negative as a configuration for generating cavitation, the stirring mechanism can be suitably used as the stirring and mixing unit 2 in the present embodiment.

The storage tank 22 stores the liquid L to be supplied into the mixing chamber 20. The storage tank 22 may have any structure insofar as the liquid L can be stored, and a specific structure thereof is not particularly limited. In a case where the slurry S is circulated via the pipes L1 and L2, the slurry S is also stored in the storage tank 22.

The storage tank 22 may be provided with auxiliary equipment for appropriately storing the liquid L and/or the slurry S. Specifically, for example, a temperature regulating mechanism may be provided around the storage tank 22, or a stirring mechanism may be provided in the storage tank 22.

The pipe L1 may be any pipe insofar as the pipe L1 can connect the storage tank 22 and the mixing chamber 20 to each other and supply the liquid L to the mixing chamber 20, and a specific structure thereof is not particularly limited. For example, as shown in FIG. 1, a pump 23 may be included on the pipe L1 for controlling the flow rate of the liquid L or smoothly transferring the liquid. In addition, a pipe that is connected to a pipe L4 in the powder supply unit 3 (to be described later) and that supplies the liquid L to the mixing chamber 20 together with the powder P is shown in FIG. 1 as the pipe L1, but, without being limited thereto, may be a pipe that directly connects the pipe L1 and the mixing chamber 20 to each other.

In addition, the pipe L2 may be any pipe insofar as the pipe L2 can discharge the slurry S produced in the mixing chamber 20 to the outside of the mixing chamber, and a specific structure thereof is not particularly limited.

Herein, the pipe L1 and the pipe L2 may be connected to enable circulation between the mixing chamber 20 and the storage tank 22 and form a circulation path for the liquid L and/or the slurry S. In particular, in a case where a configuration where cavitation is caused is used as the stirring mechanism 21, it is preferable that the liquid L can be circulated. Accordingly, it is possible to form a negative pressure state in the mixing chamber 20 and cause cavitation. In addition, the circulation path functions as a circulation path for circulating the slurry S after the mixing processing for the powder P and the liquid L is started in the stirring and mixing unit 2. Accordingly, an effect in which work efficiency can be improved and the quality of the slurry S can be improved in the preparation of the slurry S can be obtained.

The slurry S prepared in the mixing chamber 20 is discharged to the outside of the mixing chamber 20 via the pipe L2. As shown in FIG. 1, in a case where the pipe L2 is connected such that the slurry S can be circulated, the slurry S is discharged to the outside of the system via a pipe L3 that branches from a part of the circulation path (a part of the pipe L1). More specifically, the pipe L1 (an end point of the pipe L1a) and the pipe L3 are connected to each other via a valve V1, and the circulation path (pipe L1b side) and a discharge path (pipe L3 side) are separated from each other by switching of the valve V1. However, the present invention is not limited thereto. For example, the slurry S is directly discharged to the outside of the system from the pipe L2, or a pipe separate from the pipe L2 is provided independently for the mixing chamber 20, and the slurry S is discharged to the outside of the system from the pipe. The slurry S discharged to the outside of the system may be directly transferred to an implementation location or a use point of the next process or may be retained in a retaining tank or the like for retaining the slurry S.

### <Powder Supply Unit>

The powder supply unit 3 stores the powder P and inputs the powder P to the stirring and mixing unit 2.

A structure of the powder supply unit 3 may be any structure insofar as it has a configuration that can store and seal the powder P, and a specific structure is not particularly limited.

As an example of the powder supply unit 3, as shown in FIG. 1, the powder supply unit 3 includes a powder holding unit 30 that holds the powder P, a powder input part 31a that inputs the powder P, a powder discharge part 31b that discharges the powder P, and the pipe L4 through which the discharged powder P is supplied to the stirring and mixing unit 2. Herein, the pipe L4 connects the powder discharge part 31b and the stirring and mixing unit 2 to each other, and a connection location with the pipe L1 (pipe L1b) is provided on the pipe L4. A mechanism for controlling the supply of the powder P to the stirring and mixing unit 2 may be provided on the pipe L4. Specifically, an openable and closable shutter is provided on the pipe L4 (not shown). In this case, when the shutter is opened, the powder P in the powder supply unit 3 is quickly introduced into the mixing chamber 20 of the stirring and mixing unit 2 via the pipe L4. Accordingly, the powder P and the liquid L are stirred and mixed in the mixing chamber 20 to prepare the slurry S.

The powder holding unit 30 may have any shape and material that can store the powder P and is not particularly limited. As the shape of the powder holding unit 30, for example, in addition to a cylindrical shape or a rectangular parallelepiped shape, an inverted cone shape of which a side surface is inclined such that a cross-sectional area decreases from the powder input part 31a toward the powder discharge part 31b or the like can be given. In addition, a material for the powder holding unit 30 is not particularly limited, and a material having strength for storing the powder P and capable of restraining an inflow of outside air is preferable. For example, a functional sheet having a non-metal such as plastic and cloth as a base material may be used in addition to metal such as steel.

Means for introducing the powder P into the powder holding unit 30 of the powder supply unit 3 is not particularly limited. For example, a pipe connecting a container for retaining the powder P from an upper portion on a powder input part 31a side is provided, and the powder P is continuously introduced, or the powder P is directly introduced into the powder input part 31a in a batch manner. As the powder supply unit 3 in the present embodiment, as shown in FIG. 1, the powder supply unit 3 including a powder supply feeder 32 that can control the amount of powder supplied by rotation of a screw can be given.

In addition, the powder input part 31a and the powder discharge part 31b of the powder holding unit 30 may be provided with a configuration that can seal the powder holding unit 30. Accordingly, it is also possible to appropriately handle powder that is deteriorated (moistened) due to contact with the atmosphere. As such a configuration, a configuration where a lid portion including sealing means is provided for each of the powder input part 31a and the powder discharge part 31b can be given. As an example of the sealing means, a lid portion using a packing, a lid portion that performs fixation by using bolts, clamps, or the like can be given. In this case, it is preferable that a configuration that can also seal between the powder supply feeder 32 and the powder input part 31a is also provided.

The slurry manufacturing apparatus 1A in the present embodiment obtains the slurry S from the powder P and the liquid L with the stirring and mixing unit 2 and the powder supply unit 3 described above.

Then, in a slurry manufacturing time (normal time), as shown in FIG. 1, the slurry S discharged via the pipe L2 is transferred in order of the storage tank 22 and the pipe L1 (pipe L1a). In this case, directions of the valve V1 and the valve V2 to be described later are set to a flow (switching) direction such that the pipe L1a and the pipe L1b are connected to each other, and the circulation path (a part of the pipe L1, the pipe L2, and the pipe L4) with respect to the stirring and mixing unit 2 is formed. Hereinafter, a state where the directions of the valves V1 and V2 form the circulation path with respect to the stirring and mixing unit 2 will be called the "normal time".

### <pH Adjusting Unit>

The pH adjusting unit 4 supplies the carbon dioxide gas G to adjust the pH of the slurry S.

In the preparation of the slurry S, in some cases, the powder P and moisture in the atmosphere or the liquid L react with each other to produce a hydroxide, depending on a combination of the powder P and the liquid L. For example, in a case where the slurry S to be prepared is an electrode material (electrode slurry) for a secondary battery, particularly, electrode slurry containing a lithium compound (a lithium transition metal composite oxide or the like) used as a positive electrode active material for a lithium ion secondary battery, particularly, a material having a high nickel ratio, lithium hydroxide is produced by a reaction between the lithium compound (powder P) and moisture. Since lithium hydroxide is a reactive component, a reaction occurs with other components (a binder or the like) contained in the slurry S. In this case, the slurry S is deteriorated in addition to the deterioration or decomposition of the powder P, and thus it is difficult to coat an electrode base material with the slurry S after mixing as the electrode slurry. In addition, not only the performance of the electrode slurry after mixing degrades, but also generation of a harmful gas is concerned. In particular, in a case of aqueous slurry using water as the liquid L, the slurry S is strongly alkalized by lithium hydroxide, and thus the electrode base material is corroded during coating of the electrode base material.

For this reason, pH adjustment (neutralization processing) is required during the slurry manufacturing time. However, when an inorganic acid (hydrochloric acid, nitric acid, sulfuric acid, hydrofluoric acid, or the like) or an organic acid (formic acid, acetic acid, oxalic acid, lactic acid, or the like) is used as a neutralizing agent, an effect caused by a reaction with the powder P itself (dissolution of the powder P or the like) or an effect caused by the presence of a component remaining in the slurry S (a decrease in electrode performance or the like) occurs in some cases.

Therefore, the pH adjusting unit 4 in the present embodiment uses carbon dioxide gas G as a neutralizing agent. Accordingly, there are advantages in which the powder P and the neutralizing agent (carbon dioxide gas G) do not directly react with each other, and an acidic component of the neutralizing agent does not remain in the slurry S.

In particular, in the electrode slurry manufacturing time, it is possible to suppress deterioration or the like of the slurry S caused by the production of the hydroxide. Accordingly, high-quality slurry S can be obtained as a preparation, and it is possible to supply the slurry S suitable for coating to the next process. Further, in a case where the liquid L is water, the carbon dioxide gas G is dissolved in the water to generate an acidic component (carbonic acid). Therefore, a neutralization reaction between an alkaline component such as lithium hydroxide and an acidic component (carbonic acid) in the slurry S occurs. Accordingly, strong alkalization of the slurry S is more reliably suppressed, and deterioration in the physical properties of the slurry S can be suppressed.

As the pH adjusting unit 4, any unit may be used insofar as the unit can add the carbon dioxide gas G to the slurry S, and for example, as shown in FIG. 1, a carbon dioxide gas source 41 connected to the pipe L1 (pipe L1b), in which the slurry S circulates, via a pipe L5 can be given.

The carbon dioxide gas source 41 is not particularly limited insofar as the carbon dioxide gas source 41 can supply the carbon dioxide gas G. For example, as the carbon dioxide gas G, a mixed gas containing carbon dioxide as one component, such as air, can be given in addition to a high-purity gas having carbon dioxide as a main component. From a viewpoint of effectively adjusting the pH of the slurry S, it is preferable to use a high-purity gas having carbon dioxide as a main component.

In addition, either of an atmospheric pressure gas and a high pressure gas may be supplied as the carbon dioxide gas supplied by the pH adjusting unit 4.

Then, a quantitative pump 42 and a valve 43 which are provided on the pipe L5 adjust the amount of the carbon dioxide gas supplied as necessary. The quantitative pump 42 and the valve 43 can be controlled by the control unit 6 (to be described later) in terms of an operation state of the quantitative pump 42 and an opening degree of the valve 43.

### <pH Measurement Unit>

The pH measurement unit 5A measures the pH of the slurry S produced in the stirring and mixing unit 2.

Herein, as the pH measurement unit 5A in the present embodiment, a unit that collects a part of the produced slurry S from a transfer path (on the pipe L1 or the pipe L2) and measures the pH of the collected slurry S can be given. In the pH measurement, depending on the properties and characteristics of the slurry S, a load is large in a general pH measuring instrument, and damage to a pH meter (electrode damage) occurs in a short period of time, so that accurate measurement is difficult in some cases. For this reason, by collecting a part of the produced slurry S and measuring the pH, the pH measuring instrument and the slurry S can be brought into contact with each other only at a timing when the measurement is required, and stable pH measurement can be continued. In addition, as a result, control of the amount of the carbon dioxide gas supplied in the control unit 6 to be described later can also be stably continued.

Specifically, as the pH measurement unit 5A in the present embodiment, as shown in FIG. 1, a unit including a storage unit 51 that stores the slurry S collected from the transfer path (on the pipe L1) via a pipe L6, which is branched from the pipe L1 (pipe L1a portion) via the valve V2, and a pH meter 52 that measures the pH value of the slurry S in the storage unit 51 and connecting a pipe L7 through which the slurry S after the pH measurement to the outside of the system is discharged and a pipe L8 through which cleansing water for cleansing the pH meter 52 after the pH measurement and the inside of the storage unit 51 is supplied can be given.

Herein, the pH meter 52 is known as a pH measuring instrument and is not particularly limited insofar as the pH meter 52 can acquire (measure) a pH value of the slurry S. As the pH meter 52 in the present embodiment, for example, it is preferable to use a pH detector having an automatic cleansing function, which can suppress adhesion of solid content by polishing a surface of an electrode (an antimony electrode or the like) with a brush or the like and can maintain the same condition.

The pH measurement unit 5A in the present embodiment can collect the slurry S and measure the pH of the slurry S by switching the paths via the valve V2 (switching from the normal time). Accordingly, in measuring the pH of the slurry, a load on the pH meter 52 can be reduced, and the pH can be more easily and quickly measured.

In addition, it is preferable to measure the pH value of the slurry S in a state where the stirring and mixing unit 2 is stopped. In this case, the slurry S which is a target for pH measurement is the slurry S produced in a stage before (immediately before) the stop of the stirring and mixing unit 2. Accordingly, a degree of finish of the slurry S in this stage can be confirmed through the pH value measured by the pH measurement unit 5. In addition, after the pH measurement, when the operation of the stirring and mixing unit 2 is restarted, it is possible to improve accuracy of control related to the amount of the carbon dioxide gas supplied by the control unit 6 to be described later.

A pH measurement result (measured pH value) of the slurry S from the pH measurement unit 5A is input to the control unit 6 (determination unit 61) to be described later.

### <Control Unit>

The control unit 6 controls supply of the carbon dioxide gas G with the pH adjusting unit 4 according to the pH value of the slurry S acquired by the pH measurement unit 5.

As described above, in slurry manufacturing in which the powder P and the liquid L are mixed, it is preferable to adjust the pH (neutralization processing) with the carbon dioxide gas G. On the other hand, in case where a state where the opening degree of the valve 43 is excessively large or a state where the opening degree adjustment of the valve 43 is delayed when mixing efficiency between the carbon dioxide gas G and the slurry S is decreased by raising viscosity of the slurry S is reached, the carbon dioxide gas G is excessively supplied. Accordingly, when the excessive carbon dioxide gas G is present inside the mixing chamber 20, a defect related to slurry manufacturing occurs, such as a decrease in the mixing efficiency between the powder P and the liquid L or an increase in time required for mixing. In particular, as the excessive carbon dioxide gas G is mixed into the stirring mechanism 21, a so-called air inclusion state occurs, and a defect in which dispersion becomes difficult occurs. In addition, in a case where the slurry S is particularly electrode slurry containing a lithium compound, excessive supply of the carbon dioxide gas G leads to excessive production of lithium carbonate, which leads to a decrease in electrode performance.

Therefore, as the control unit 6 controls the amount of the carbon dioxide gas supplied from the pH adjusting unit 4 based on the pH value of the slurry S, the amount of the carbon dioxide gas supplied can be optimized at all times. Accordingly, production and pH adjustment of the slurry can be continued in a state where an effect related to occurrence of a defect caused by excessive supply of the carbon dioxide gas is more accurately avoided and eliminated, and the quality of the slurry can be maintained and improved.

As the control unit 6, a unit including the determination unit 61 that acquires the pH value of the slurry S from a measurement result from the pH measurement unit 5 described above and that determines a situation related to the pH of the slurry S and an operation control unit 62 that performs an operation on a location related to supply of the carbon dioxide gas G from the pH adjusting unit 4, based on a determination result from the determination unit 61 can be given.

The determination unit 61 determines the amount of the carbon dioxide gas G supplied to the slurry S, based on a measurement result (measured pH value) from the pH measurement unit 5.

As an example of the determination in the determination unit 61, determination is made to maintain and continue the amount of the carbon dioxide gas supplied from the pH adjusting unit 4 without being changed in a case where the pH value of the slurry S corresponding to desired performance is set as a set pH value (threshold), and the measured pH value is within the set pH value, and determination is made to increase (or reduce) the amount of the carbon dioxide gas G supplied and to extend (or shorten) the supply time of the carbon dioxide gas G in a case where the measured pH value exceeds (or falls below) the set pH value. In addition, after the slurry S has been circulated in the circulation path for a predetermined time, in a case where the measured pH value is within the set pH value, it is considered that mixing of the powder P and the liquid L is completed, and determination to supply the slurry S to the next process is made.

That is, the determination unit 61 acquires a circulation time of the slurry S as a parameter in addition to the comparison calculation between the measured pH value and the set pH value and uses the circulation time in calculation.

Then, the determination result in the determination unit 61 is input to the operation control unit 62.

The operation control unit 62 performs an operation on a location related to supply of the carbon dioxide gas G in the slurry manufacturing apparatus 1A, based on the determination result from the determination unit 61.

An example of the operation in the operation control unit 62 is to increase the opening degree of the valve 43 in a case where the determination result from the determination unit 51 is an increase in the amount of the carbon dioxide gas G supplied. In addition, in a case where the determination result from the determination unit 51 is that the mixing is completed, the valve V1 is switched from the normal time, and the slurry S is transferred to the next process (outside of the system) by connecting the pipe L1a and the pipe L3.

In addition, the operation in the operation control unit 62 is not limited to an operation directly involved in supply of the carbon dioxide gas from the pH adjusting unit 4. For example, as another example related to the operation by the operation control unit 62, an operation involved in pH measurement, for example, an operation of supplying the slurry S to the pH measurement unit 5 is performed. More specifically, the valve V2 is switched from the normal time to supply the slurry S to the storage unit 51 via the pipe L6, and the pH of the slurry S in the storage unit 51 is measured by the pH meter 52.

In this case, a level sensor is further provided in the storage unit 51, determination is made in the determination unit 61 as to whether or not the slurry S required for pH measurement can be collected in the storage unit 51 according to a result from the level sensor, or whether or not cleansing of the pH meter 52 is performed. According to the determination result, the operation control unit 62 performs an operation related to switching of the valve V2 or driving stop and restart of the pump 23.

In addition, as another example related to the operation in the operation control unit 62, stopping and restarting of the stirring and mixing unit 2 during pH measurement can be given.

Accordingly, the necessity of a direct operation by a worker for an operation related to pH measurement is reduced, and automation is facilitated. Therefore, a timing of the pH measurement can be optimized. Accordingly, calculation related to optimization of the amount of the carbon dioxide gas supplied in the control unit 6 can be performed with higher accuracy.

As described above, the control unit 6 is a unit that defines a set value (set pH value) set in advance as determination reference and that performs required determination and operation based on the measured pH value obtained from the pH measurement unit 5 and an operation time (the circulation time of the slurry S) of the slurry manufacturing apparatus 1A. In addition, the control unit 6 preferably performs control related to setting and supplying an additional amount of the carbon dioxide gas G supplied according to a difference between the measured pH value and the set pH value of the slurry S.

Herein, the determination and operations in the control unit 6 can be entirely determined and manually performed by the worker. However, it is preferable to use a calculation device that executes a program related to the determination and operation described above by a processor such as a CPU to enable automatic control, thereby improving productivity and reducing costs. Accordingly, since it is not required to make highly advanced determination or to take a measure by the worker, the amount of the carbon dioxide gas supplied can be optimized at all times, and it is possible to continue stable slurry manufacturing and to provide high-quality slurry.

### [Second Embodiment]

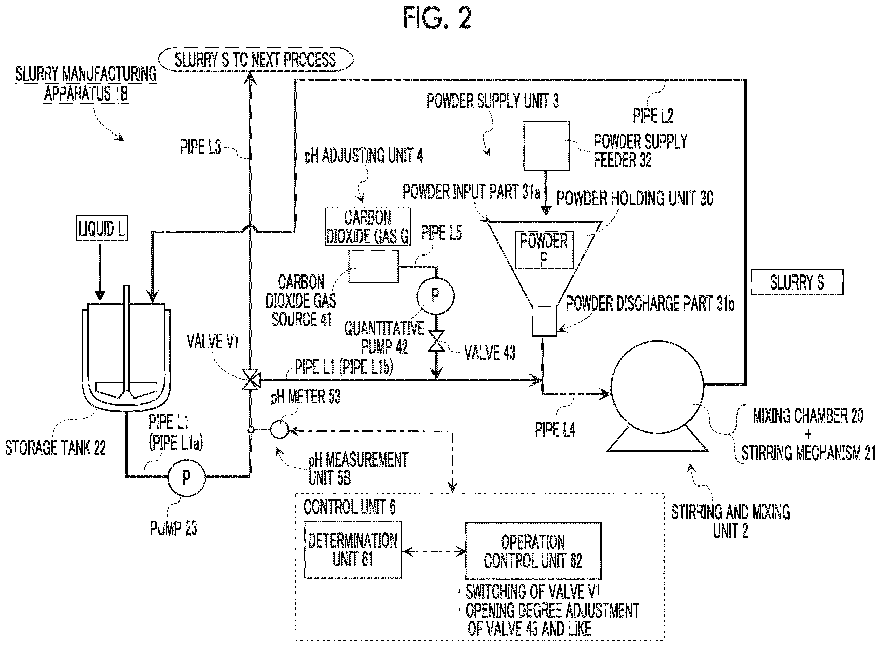

FIG. 2 is a schematic explanatory diagram showing a structure of a slurry manufacturing apparatus according to a second embodiment of the present invention.

As shown in FIG. 2, a slurry manufacturing apparatus 1B in the present embodiment is the same as the slurry manufacturing apparatus 1A in the first embodiment except that the pH measurement unit 5A is replaced with a pH measurement unit 5B. In addition, the description of the same configuration as that of the first embodiment will be omitted.

The slurry manufacturing apparatus 1B in the present embodiment is provided with a pH meter 53 directly on the transfer path (on the pipe L1a) of the slurry S as the pH measurement unit 5B. Accordingly, the pH value of the slurry S is directly measured on the transfer path of the slurry S, and thus it is possible to simplify a structure related to pH measurement of the slurry S and to save space.

The embodiments described above are examples of the slurry manufacturing apparatus and the slurry manufacturing method of the present invention. The slurry manufacturing apparatus and the slurry manufacturing method according to the present invention are not limited to the embodiments described above. The slurry manufacturing apparatus and the slurry manufacturing method according to the embodiments described above may be modified without departing from the concept described in the claims.

### Industrial Applicability

The slurry manufacturing apparatus and the slurry manufacturing method of the present invention are suitably used in adjusting (manufacturing) a mixture (slurry) made by mixing powder and a liquid and are particularly suitably used for those in which pH fluctuations occur during the slurry manufacturing time.

In addition, the slurry manufacturing apparatus and the slurry manufacturing method of the present invention are suitably used in a case where excessive supply of the carbon dioxide gas affects a slurry production process or slurry performance. For example, the present invention can be particularly suitably used when manufacturing a lithium ion battery electrode material in which a decrease in performance is caused by a material produced by excessive supply of the carbon dioxide gas.

### Reference Signs List

- 1A, 1B: slurry manufacturing apparatus
- 2: stirring and mixing unit
- 20: mixing chamber
- 21: stirring mechanism
- 22: storage tank
- 23: pump
- 3: powder supply unit
- 30: powder holding unit
- 31a: powder input part
- 31b: powder discharge part
- 32: powder supply feeder
- 4: pH adjusting unit
- 41: carbon dioxide gas source
- 42: quantitative pump
- 43: valve
- 5A, 5B: pH adjusting unit
- 51: storage unit
- 52, 53: pH meter
- 6: control unit
- 61: determination unit
- 62: operation control unit
- L: liquid
- P: powder
- S: slurry
- L1: to L8 pipe

## Claims

1. A slurry manufacturing apparatus comprising:
a stirring and mixing unit that mixes powder and a liquid and produces slurry;
a pH adjusting unit that supplies a carbon dioxide gas for adjusting a pH of the slurry; and
a control unit that controls an amount of the carbon dioxide gas supplied from the pH adjusting unit based on a pH value of the slurry.

2. The slurry manufacturing apparatus according to claim 1,
wherein the pH value of the slurry is measured by collecting a part of the slurry from a transfer path of the slurry.

3. The slurry manufacturing apparatus according to claim 2,
wherein the pH value of the slurry is measured by supplying the slurry to a path separate from the transfer path of the slurry.

4. The slurry manufacturing apparatus according to claim 1,
wherein the pH value of the slurry is directly measured on a transfer path of the slurry.

5. The slurry manufacturing apparatus according to any one of claims 1 to 4,
wherein the pH value of the slurry is measured in a state where the stirring and mixing unit is stopped.

6. The slurry manufacturing apparatus according to claim 1,
wherein the control unit performs control related to setting and supplying of an additional amount of the carbon dioxide gas supplied according to a difference between a measured pH value and a set pH value of the slurry.

7. A slurry manufacturing method comprising:
a stirring and mixing process of mixing powder and liquid and producing slurry;
a pH adjusting process of supplying a carbon dioxide gas for adjusting a pH of the slurry; and
a control process of controlling an amount of the carbon dioxide gas supplied in the pH adjusting process based on a pH value of the slurry.
